Europäisches Patentamt

European Patent Office

Office européen des brevets

(11) Publication number: **0 145 379**
**A2**

## EUROPEAN PATENT APPLICATION

(21) Application number: **84308096.1**

(22) Date of filing: **22.11.84**

(51) Int. Cl.⁴: **G 01 F 23/14**

(30) Priority: **23.11.83 US 554860**
**09.11.84 US 669301**

(43) Date of publication of application: **19.06.85**
**Bulletin 85/25**

(84) Designated Contracting States: **AT BE CH DE FR GB IT LI LU NL SE**

(71) Applicant: **TRANSITRON ELECTRONICS CORP., 100 Unicorn Park Drive, Woburn Massachusetts 01801 (US)**

(72) Inventor: **Hayes, Stanley B., 37 Elmwood Avenue, Attleboro Massachusetts 02703 (US)**
Inventor: **O'Connor, Robert T., 43 Fairview, Holliston Massachusetts 01746 (US)**
Inventor: **Monroe, Kenneth, 48 Main Street, Essex Massachusetts 01929 (US)**

(74) Representative: **Read, Matthew Charles et al, Venner Shipley & Co. 368 City Road, London EC1V 2QA (GB)**

(54) **Tank level measuring system.**

(57) A system for measuring the amount of liquid product in a storage tank and including a first pair of pressure transducers disposed at a bottom of the storage tank and spaced relatively closely one to the other. There is also provided a second pair of pressure transducers disposed a predetermined distance above the bottom of the storage tank and spaced a distance from the first pair of pressure transducers that is greater than the spacing between the transducers of either pair. Sensing means are provided for measuring pressure differentials between the transducers of the first pair and also for measuring pressure differentials between the transducers of the second pair. Furthermore, sensing means are provided for providing a density measurement by measuring the pressure differential between one of the transducers of each pair. Water level detection at the bottom of the tank is carried out by measuring the pressure differential between the lowermost pair of transducers. In one embodiment the pressure transduction is from liquid pressure to pneumatic pressure employing remotely disposed pressure-to-electrical transducers. In an alternate embodiment the transducers within the tank are pressure-to-electrical transducers providing direct pressure readings in the tank.

TANK LEVEL MEASURING SYSTEM

Background of the Invention

The present invention relates in general to a system for measuring the level of liquid in a tank such as might be applied in the measurement of the volume of liquid remaining in a gasoline storage tank at a gasoline service station. More particularly, the invention pertains to a liquid level detection system that has temperature compensation capabilities, functions as a densitometer, and further has the capability of sensing water in the bottom of the storage tank.

Quite often, it is desirable or necessary to measure the amount of liquid product that is contained in a storage tank. For example, it is necessary in most gasoline service stations to periodically measure the amount of liquid in the storage tanks for the purpose of checking supplies and for the purpose of ordering deliveries. Such measurements are very typically taken using a measuring stick which may provide inaccuracies from reading to reading. Furthermore, with the use of a measuring stick, it is many times difficult to take readings under severe weather conditions.

Techniques have been devised to measure the amount of liquid product contained in a storage tank. These different techniques range from mechanical floats attached to dials and manually inserting graduated sticks as mentioned previously, to relatively sophisticated systems using air bubblers, capacitors, or pressure transducers. Another technique is to measure the difference in the dielectric constant of the product compared to the dielectric constant of air. The problem with this technique is that it is precluded from use with products that are electrical conductors or that have a dielectric constant close to that of air.

In connection with the prior general techniques that have been discussed for measuring liquid product, it is one important object of the present invention to provide a tank measurement system with features that enable the system to serve as the best and most cost effective system for obtaining accurate tank level measurements.

Another object of the present invention is to provide a tank level measuring system that is of relatively simple construction having essentially no moving parts with the exception of slight diaphragm movement. In accordance with one embodiment of the invention, there is provided preferably small stainless steel or brass tubing for connecting the diaphragms to the control electronics.

Still another object of the present invention is to provide a tank level measuring system which is safe in operation. In accordance with one embodiment of the invention, there is no danger from electrical failure since there are no electrical signals in the tank, only pneumatic signals. In accordance with another embodiment of the invention, electrical leads are coupled into the tank but these leads carry extremely low level electrical signals and thus do not present any safety problem and the sensor system is considered intrinsically safe.

Still another object of the present invention is to provide a level measuring system for storage tanks in which the detection is not dependent on the product dielectric constant.

Still a further object of the present invention is to provide a tank level measuring system which is adapted for use even when the liquid product may be corrosive. Virtually any product or fuel compatible with aluminum, brass, ceramics or stainless steel is suitable.

Still a further object of the present invention is to provide a tank level measuring system that detects product density and essentially corrects for changes in product density.

Another object of the present invention is to provide a tank level measuring system that provides for the automatic compensation for atmospheric pressure or any other positive or negative pressure at the top of the tank. In this connection if a vent pipe plugs or if positive pressure develops for any reason, the system of the present invention automatically compensates and continues to measure only the amount of actual product that is present.

A further object of the present invention is to provide a tank level measuring system in which it is preferred that the product level is based upon a weight measurement rather than a volume measurement. This capability is especially useful with products having high thermal conductivities that may experience a volume change with temperature change over a relatively short time period. Other measurement techniques would have to assume loss of the product such as due to a leak, on volume shortage or product gain from some outside source. In accordance with the present invention the system calculates loss or gain based on weight by measuring product density since weight is equal to the product density times the volume.

Still another object of the present invention is to provide a tank level measuring system which has the ability to detect water in the bottom of the tank. With this feature, one can have an alarm indication on the system display when a particular fuel tank has water in the bottom that has reached a certain predetermined level.

Summary of the Invention

To accomplish the foregoing and other objects and advantages of the invention, there is provided a tank level measuring system which not only detects the level of liquid, or the amount of product in a storage tank, but also has the capability of detecting product density and detecting the presence of water in the storage tank which usually settles to the bottom of the storage tank, particularly in usual applications wherein the product is gasoline. The measuring system of the present invention is particularly adapted for use in measuring product liquids such as gasoline or oil in their storage tanks. In accordance with one embodiment of the present invention, the tank level measuring system incorporates pneumatic sensing within the tank and thus employs pressure transducers within the tank that convert liquid pressure to pneumatic pressure. In accordance with this embodiment, the measuring system comprises first and second pairs of pressure transducers. One pair of pressure transducers may be disposed about one foot above the bottom of the storage tank and another pair of pressure transducers is disposed substantially at the very bottom of the storage tank. In this one pair of pressure transducers, one of the transducers is subjected to atmospheric pressure while the second transducer is exposed to the pressure of the liquid at its predetermined position. With regard to the pair of transducers, one may be exposed to either fuel or the atmosphere and the second transducer is exposed to the fuel product at the very bottom of the storage tank. The detection means is provided including a first sensor associated with the first pair of pressure transducers for sensing atmospheric correction, and a second sensor associated with the second pair of pressure transducers for sensing the detection of water in the storage tank. There is also provided a third sensor essentially intercoupled between the first and second pairs of pressure transducers for providing an output corresponding to liquid product density. With regard to density measurements, the transducer pairs are disposed a fixed distance apart and the pressure measurements are taken at the two equally spaced locations. The pressure difference is representable as a density. As indicated, the detection of pressure is by means of a transducer at the bottom that is essentially a pressure-to-pressure transducer. However, more particularly, it may be referred to as a transducer that converts liquid pressure to pneumatic pressure. The aforementioned sensors are in a sense also transducers that convert these pneumatic pressures to corresponding electrical signals.

In accordance with the second emmbodiment of the invention, there is provided a tank level measuring system which not only detects the level of liquid, or the amount of product in a storage tank, but also has the capability of detecting product density and detecting the presence of water in the storage tank which usually settles to the bottom of the storage tank, particularly in usual applications wherein the product is gasoline. The measuring system of the present invention is particularly adapted for use in measuring product liquids such as gasoline or oil in their storage tanks. In accordance with this second embodiment of the present invention, the tank level measuring system incorporates electrical sensing within the tank and thus employs pressure transducers within the tank that convert liquid pressure to an electrical signal. The measuring system comprises a first pair of pressure transducers and at least one additional transducer. The first pair of pressure transducers is disposed substantially at the very bottom of the storage tank. The additional pressure transducer is disposed at a position approximately one foot above the bottom of the tank. Each of the pressure transducers is normalized to the pressure at the top of the tank and each provides a direct electrical signal corresponding to their positional arrangement. Upon sensing of these signals, the level of liquid in the tank can be determined as in accordance with the first embodiment.

Brief Description of the Drawings

Numerous other objects, features and advantages of the invention should now become apparent upon a reading of the following detailed description taken in conjunction with the accompanying drawing, in which:

FIG. 1 is a cross-sectional view of one embodiment of the tank level measuring system of the present invention used in connection with a storage tank and illustrating the placement of the pressure transducers, as well as associated controls including a wall mounted display unit;

FIG. 2 is a cross-sectional view along line 2-2 of FIG. 1 taken at the top pair of pressure transducers;

FIG. 3 is a cross-sectional view taken at line 3-3 of FIG. 1 and taken substantially at the second lower pair of pressure transducers;

FIG. 4 is a cross-sectional view taken along line 4-4 of FIG. 2 showing further details associated with the top pair of pressure transducers;

FIG. 5 is a cross-sectional view taken along line 5-5 of FIG. 2 and illustrating further details of the upper pair of pressure transducers;

FIG. 6 is a cross-sectional view taken along line 6-6 of FIG. 3 and illustrating the arrangement for supporting and communicating with the pressure transducers;

FIG. 7 is a cross-sectional view taken along line 7-7 of FIG. 3 illustrating further details not shown in FIG. 6;

FIG. 8 is a more schematic diagram than the view of FIG. 1 also illustrating the sensors or detectors associated with each of the pressure transducers;

FIG. 9 is a cross-sectional side elevation view of a second embodiment of the tank level measuring system of the present invention illustrated in connection with a storage tank and also showing the placement of the pressure transducers;

FIG. 10 illustrates a portion of the system of FIG. 9 and in particular illustrating the details of a means for preventing overflow of liquid into the coupling pipe;

FIG. 11 is a cross-sectional view taken along line 11-11 of FIG. 9 showing further details of the transducer; and

FIG. 12 is a side elevation cross-sectional view as taken along line 12-12 of FIG. 9 illustrating further details of one of the mounting arrangements for the single transducer mount.

Detailed Description

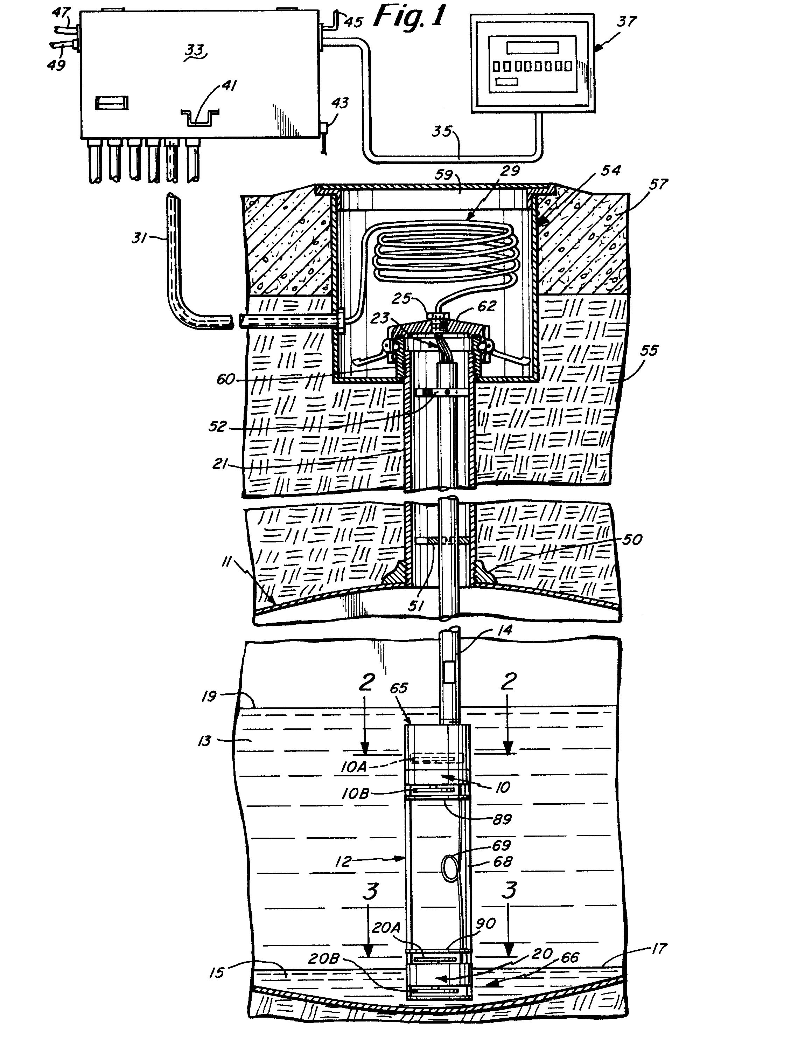

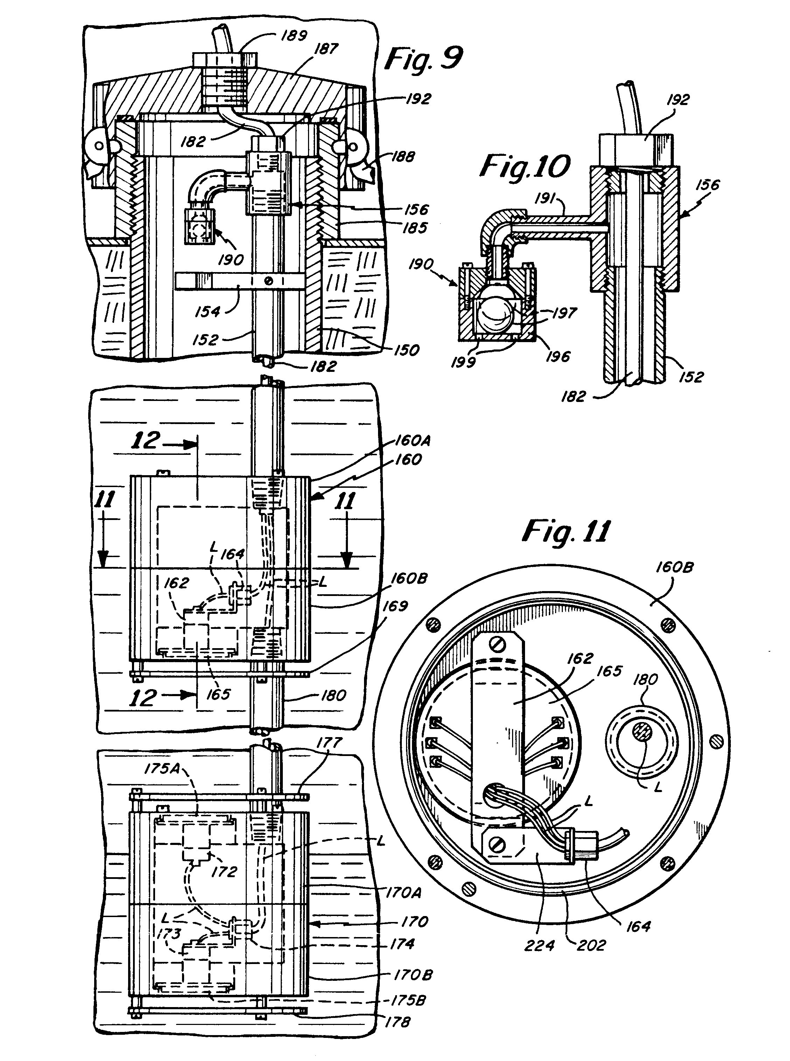

One embodiment of the present invention is illustrated in FIGS. 1-8 in which pressures are sensed pneumatically at the bottom of the storage tank. A second embodiment of the invention is illustrated in FIGS. 9-12 in which pressure-to-electrical transduction is employed in the storage tank. In either case, the system is for detecting, inter alia, the level of liquid in a storage tank. The system of the present invention is intended for use primarily in connection with gasoline storage tanks at a service station, however, the system may be used in connection with virtually any type of liquid storage tank. The level of liquid is detected by way of pressure measurements and by furthermore correlating pressure to the height of the liquid in the container. Another aspect of the system of the invention is the capability of detecting water in the storage tank which usually settles to the bottom of a storage tank such as a gasoline or oil storage tank.

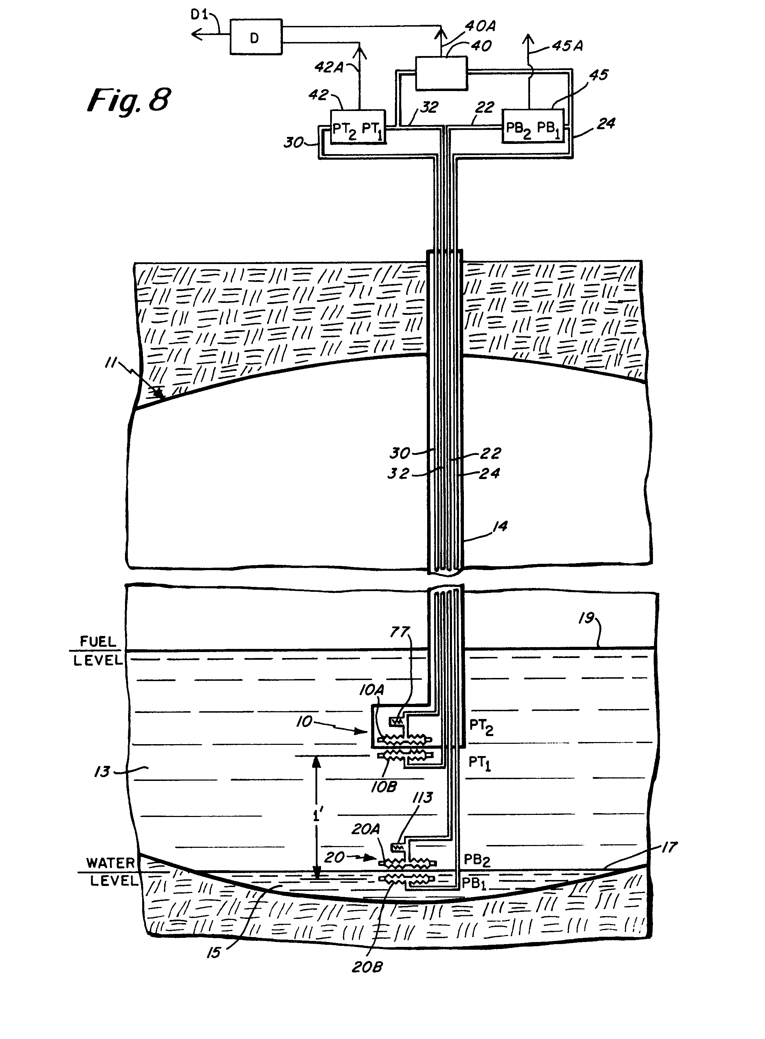

In accordance with the embodiment of the invention illustrated in FIGS. 1-8, there is provided a dual set of transducers depicted positionally as in FIGS. 1 or 8. These transducers include a first pair of transducers 10 and a second pair of transducers 20. The transducers 20 are disposed at the very bottom of the tank while the transducers 10 are disposed about a foot above the bottom of the tank. The transducers 10 include a pair comprised of separate transducers 10A and 10B. Similarly, the transducers 20 comprise a pair of transducers including transducers 20A and 20B.

FIG. 1 shows the overall system of the present invention as used with a storage tank 11 filled with a liquid product 13 which may be a fuel oil or gasoline. FIG. 1 also illustrates the presence of water 15 at the bottom of the storage tank. The detection of the water level at the water-product interface 17 is discussed in detail hereinafter. FIG. 1 also illustrates the liquid product level 19 in the tank 11.

The transducer pairs 10 and 20 are supported within a housing assembly 12 which is adapted to position the transducers so that the transducers 20A and 20B are at or very close to the bottom of the tank and the transducers 10A and 10B are supported above the bottom such as at the level of say one foot from the bottom of the tank. The one foot position presupposes a tank of several feet in height. FIG. 1 also depicts a coupling tube 14 that connects from the housing assembly 12 to a position at the top end of the rigid sleeve 21. A coupling tube 14 contains a series of capillary tubes 23 illustrated extending from the top of the coupling tube 14 and into the stuffing gland 25. Above the gland 25 there is provided a plastic sleeve 29 shown coiled and for containing the series of capillary tubes. The encased capillary tubes extend through conduit 31 to the control box 33. Reference is made hereinafter, particularly with regard to FIG. 8, to the pressure transducer sensing aspects of the invention. Briefly, it is noted in FIG. 1 that the control box 33 has a line 35 coupling to a wall mounted display unit 37 which is adapted to display such parameters as liquid level, liquid volume remaining in the storage tank, and liquid density. The display unit 37 is also adapted to have a display that is either visual or audible for indicating an excess water level in the bottom of the storage tank.

The control box 33 is also illustrated as having a handle 41 for opening the box. A number of separate additional conduits and an addition to conduit 31 are also shown. These may couple to other storage tanks not illustrated herein, but being of the same type and having the same transducer arrangement as depicted in FIG. 1. Also illustrated in FIG. 1 is an external case ground lug 43, a telephone line 45 an AC input line 47 and a DC input line 49.

The rigid sleeve 21 depicted in FIG. 1 is preferably threaded at its bottom and engages with a nut 50 that may be welded to the storage tank 11 about its top opening. The coupling tube 14 has secured thereto an intermediate support plate 51 and an upper support plate 52. Both of the support plates may be secured to and about the coupling tube 14 by means of a pair of set screws on oppositely disposed sides thereof. The support plates 51 and 52 are adapted to hold the coupling tube 14 securely within the rigid sleeve 21 and insure that the coupling tube 14 remains vertical.

The top end of the rigid sleeve 21 is received in an access housing 54 which provides access to the plastic sleeve 29 containing the series of capillary tubes 23. The access housing 54 along with the rigid sleeve 21 are supported in the earth 55, above the earth there is preferably provided a concrete slab 57 and the access housing 54 has a top cover 59 which is shown in place but which may be removed to provide access to the housing 54.

The top of the rigid sleeve 21 is also preferably threaded to receive a collar 60 and secured about the collar 60 is a quick disconnect cap 62 which has a series of latch arms 63. The cap 62 and latch arms 63 may be of substantially conventional design. When the quick disconnect cap is removed, there is then provided access to the coupling tube 14. It is through the rigid sleeve 21 actually that the housing assembly 12 is disposed in position and removed if necessary.

The housing assembly 12 depicted in FIG. 1 includes an upper housing member 65 and a lower housing member 66. These housing members are interconnected, inter alia, by means of vertically disposed longitudinal standoffs 68. In FIG. 8, also note two of the capillary tubes 23 in a loop 69.

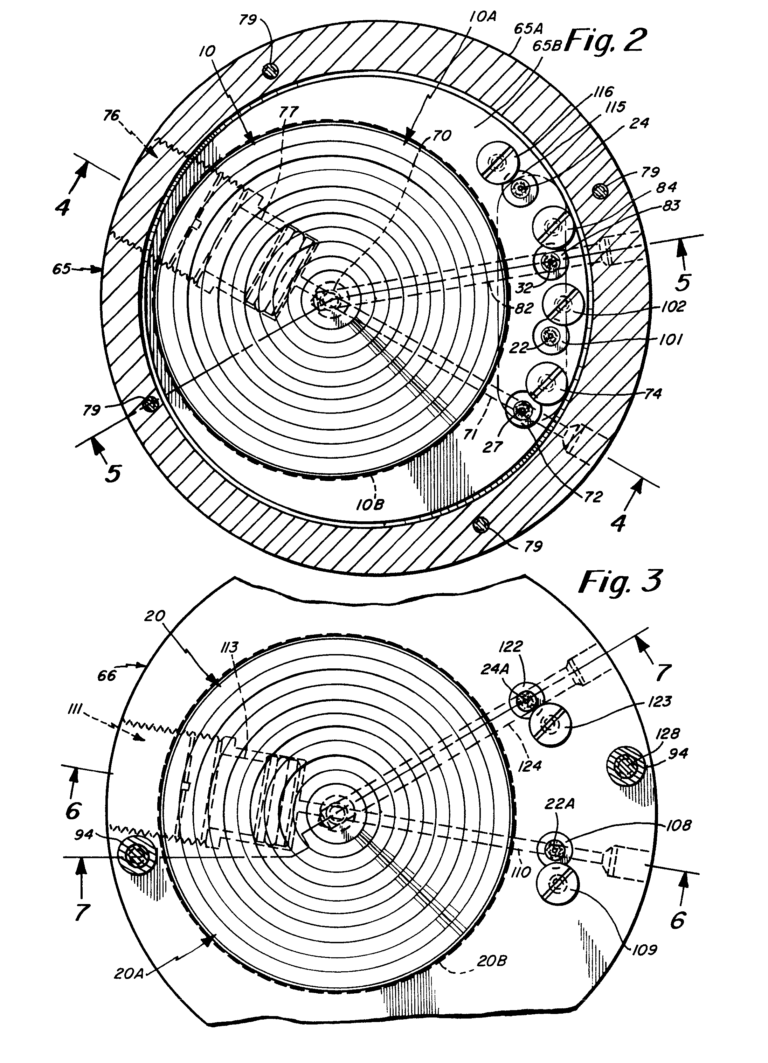

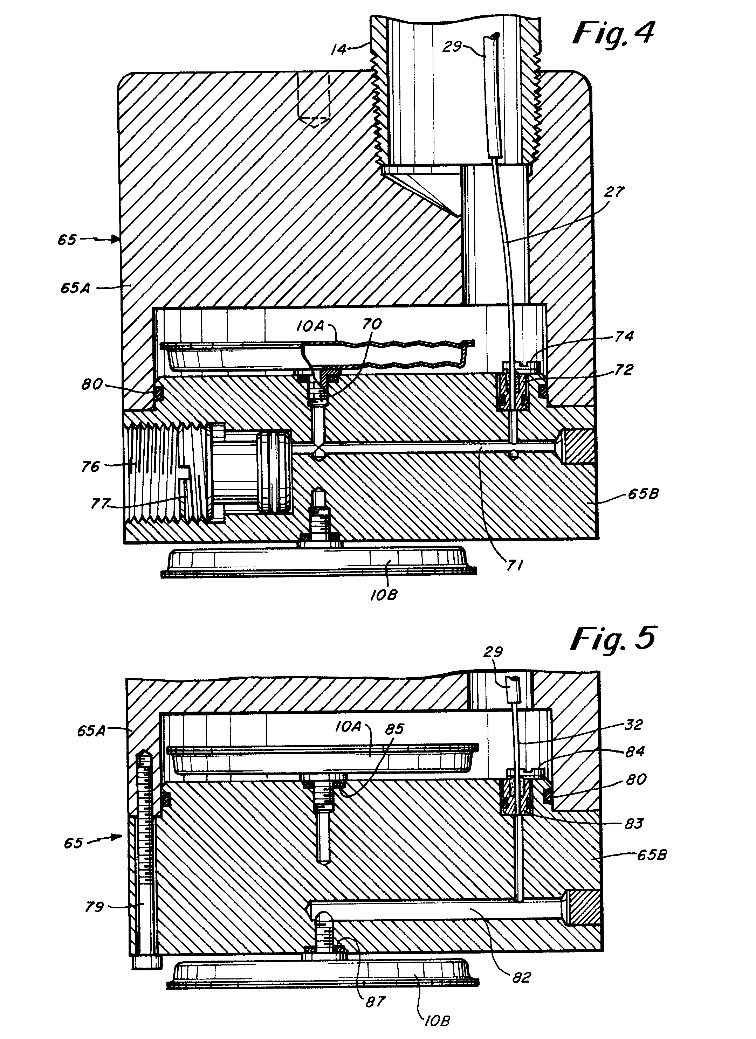

Reference is now made to FIGS. 2-7 which show further details in particular of the housing assembly 12 with the associated pressure transducer pairs 10 and 20. As depicted, for example, in FIG. 4, the housing member 65 includes an upper member 65A and a lower support member 65B. FIG. 4 also shows the details of the pressure transducers 10A and 10B. All of the pressure transducers are of the disk type and have threaded posts attached thereto for screwing the pressure transducers into the member 65B. FIG. 4 shows one of the threaded posts 70 adapted to screw into the member 65B and properly position the pressure transducer 10A. It is noted that the chamber of

-10-

pressure transducer 10A couples by way of coupling port 71 to the capillary tube 27. The tube 27 is supported in a gland 72. A bolt 74 holds the gland 72 in place.

FIG. 4 also shows a threaded opening 76 containing a tuning screw 77. The screw 77 is used to equalize volume and also equalize any differences between the spring constants of the transducers 10A and 10B. It is desired to make the volumes the same between the transducers 10A and 10B and their associated couplings such as the coupling port 71 and associated capillary 27 shown in FIG. 4.

FIG. 5 also shows the pressure transducers 10A and 10B. This view is taken along line 5-5 of FIG. 2 and is taken through one of the bolts 79 that secures the members 65A and 65B together. Also note the use of an O-ring 80 between the members 65A and 65B. FIG. 5 also shows the porting from the pressure transducer 10B which includes a coupling port 82 that couples to the capillary tube 32. Associated with the capillary tube 32 and its bottom end is a gland 83 and associated securing bolt 84.

In addition to the O-ring 80 between the members 65A and 65B there are also preferably provided O-rings associated with the pressure transducers 10A and 10B as illustrated in FIG. 5. These include a first O-ring 85 associated with pressure transducer 10A and a second O-ring 87 associated with pressure transducer 10B. These O-rings assure that the pressure transducers are properly sealed to their support member 65B.

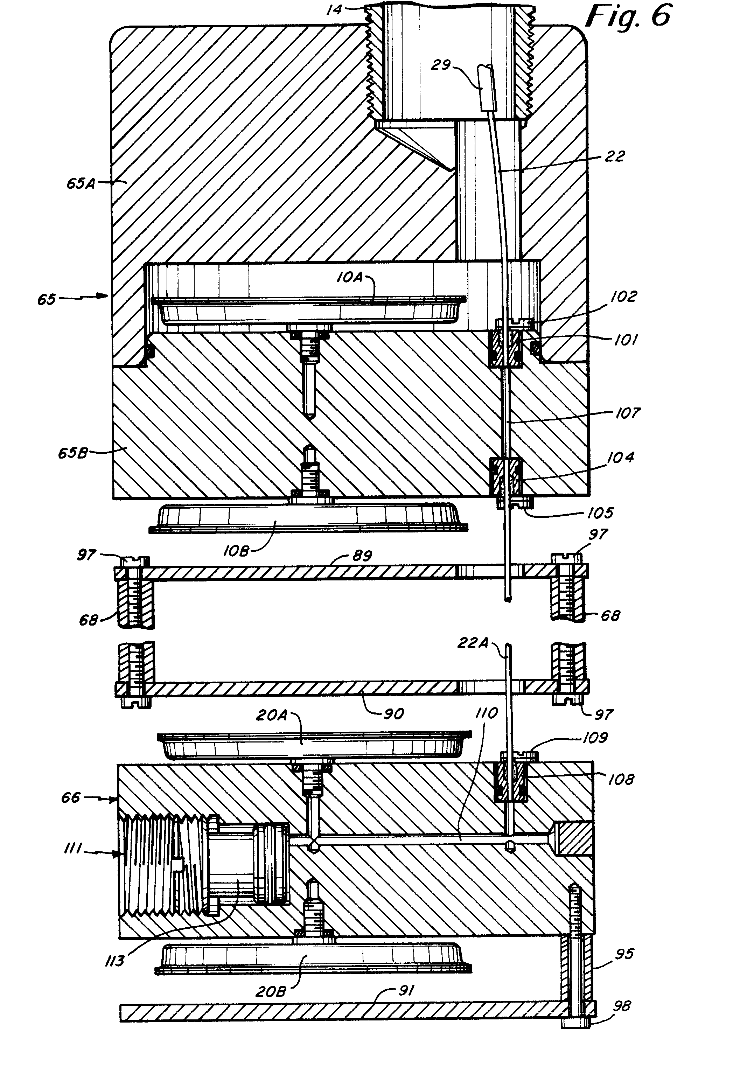

FIG. 6 also shows the housing members 65A and 65B and the coupling tube 14. Also shown in FIG. 6 is the bottom of the plastic sleeve 29 used to encase the capillary tubes. FIG. 6 shows the protective plates 89, 90 and 91. The plate 89 is adapted for protection of the pressure transducer 10B. The plate 90 protects the pressure transducer 20A and the plate 91 protects the pressure transducer 20B. These plates prevent
damage, during handling, to the pressure transducers,
particularly when the housing assembly 12 is being inserted or
withdrawn from the storage tank. FIG. 6 also shows the
stand-offs 68 which extend between the protective plates 89 and

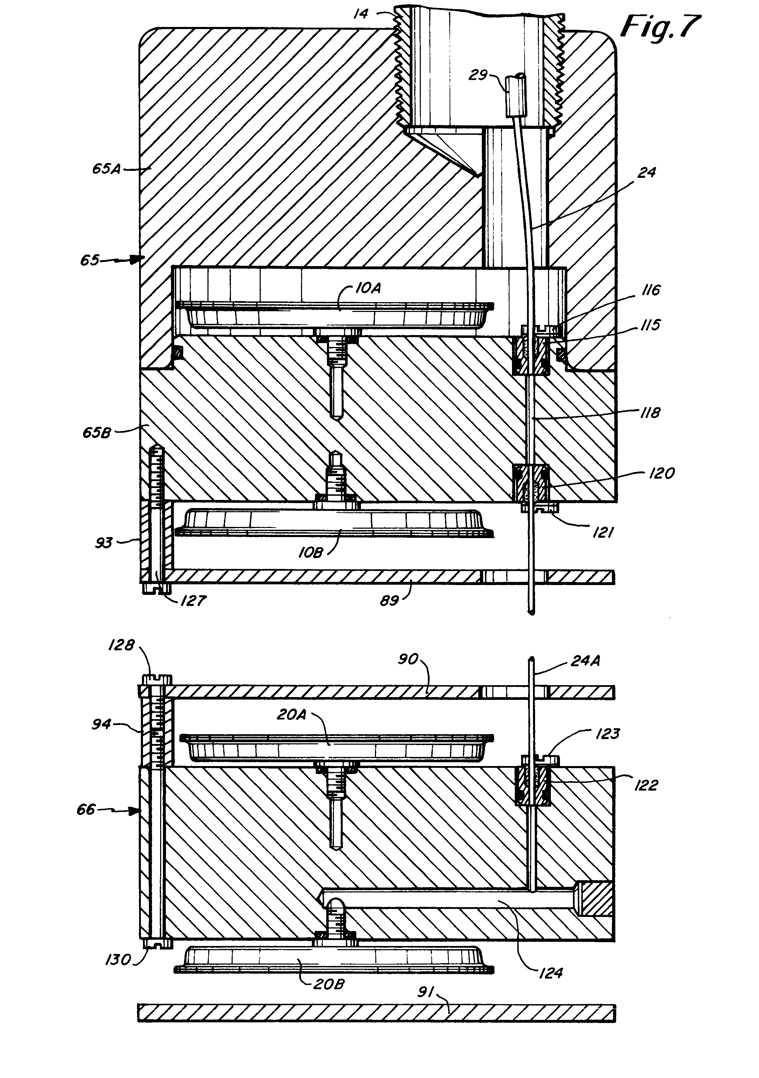

90. FIG. 7 shows the short stand-offs 93 and 94 and one
additional short stand-off 95 is shown in FIG. 6. The short
stand-offs are adapted to provide the primary support of the
protective plates 89, 90 and 91.

Thus, in FIG. 6, there are shown bolts 97 that are adapted
to provide support for the stand-offs 68 and provide securing
for disposing the protective plates 89 and 90. There is also
shown an elongated bolt 98 passing through the stand-off 95 for
securing the protective plate 91 to the housing member 66.

In FIG. 6 there is depicted the capillary tube 22 which
couples from the gland 101 which in turn is secured in position
by the bolt 102. At the lower end of the housing member 65
there is also provided another gland 104 and associated
securing bolt 105. There is a port 107 passing through the
member 65B for coupling from the capillary tube 22 to a lower
capillary tube 22A. The bottom of the capillary tube 22A rests
in a further gland 108 and associated securing bolt 109
associated with the housing member 66. As illustrated in FIG.
6, there is a coupling port 110 in the member 66 which is
adapted to couple from the pressure transducer 20A to the
capillary tube 22A by way of the port 107, to the capillary
tube 22. There is also associated with the member 66, a
threaded opening 111 for receiving the tuning screw 113. The
tuning screw 113 operates in the same manner as the tuning
screw 77 referred to in FIG. 4 providing an equalization of
volume and also equalization of any differences between the
spring constants of the transducers 20A and 20B.

With regard to FIG. 7, there is shown the capillary tube 24 extending through the coupling tube 14 and terminating at the housing member 65B and in particular at the gland 115 having associated therewith the securing bolt 116. There is also provided a port 118 through the member 65B coupling to a second gland 120 and associated securing bolt 121. The gland 120 supports a lower capillary tube 24A that sits within a gland 122 in the housing member 66. The gland 122 has associated therewith, a securing bolt 123. The cross-sectional view of FIG. 7 is adapted to show the coupling of pressure from the transducer 20B by way of the coupling port 124 to the capillary tube 24A, through the port 118 to the capillary tube 24 which couples to the system control box described in further detail in connection with FIG. 8.

FIG. 7 also shows the stand-off 93 which is secured to the housing member 65B by means of the bolt 127. The short stand-off 94 is also secured to the housing member 66 by means of a short bolt 128 and an elongated bolt 130. FIG. 3 also shows the stand-off 94 and associated bolt 128.

In FIGS. 6 and 7 it is noted that three of the pressure transducers, namely transducers 10B, 20A and 20B are subject to the liquid product at the particular level at which they are supported. On the other hand, the transducer 10A is in communication with the coupling tube 14 and thus senses pressures at the top of the tube 14 or essentially at a position at the top of the tank over the liquid level.

FIG. 8 is a diagram showing the storage tank 11 containing the liquid product 13 and indicating the level of the liquid product at 19. The liquid product-water interface at 17 is also illustrated.

In FIG. 8 the pressures at the respective transducers are indicated by pressures PT1 and PT2 associated with transducers 10 and pressures PB1 and PB2 associated with transducers 20. FIG. 8 also shows the four capillary tubes 22, 24, 30 and 32 coupling from the pressure transducers to the detection circuitry which is shown as comprising three sensors 40, 42, and 45. The sensor 42 senses a differential pressure between the pressures measured at transducers 10A and 10B. It is noted that there is an output on line 42A from sensor 42 indicative of this pressure difference. With regard to the sensors, it is noted that all of the sensors may be of conventional design simply providing an output electrical signal responsive to the pressure levels sensed at the inputs to the device.

The sensor 45 has connected thereto capillary tubes 22 and 24 and thus senses the pressure differential between pressure transducers 20A and 20B. There is an output on line 45A from sensor 45 that gives an electrical signal representative of this pressure difference.

Also, there is a sensor 40 which also is adapted to sense a pressure differential. This sensor receives pressures from capillary tubes 32 and 24. These pressure signals are the pressure levels PT1 and PB1. It is noted that there is an output at line 40A from sensor 40.

As indicated previously, the sensor 42 has an output that is representative of the pressure PT1 as adjusted by the pressure sensed at the top of the tank represented by the pressure PT2. In this way, if a vent pipe plugs or if positive or even negative pressure occurs for any reason, the system automatically compensates and continues to measure only the amount of the pressure due to the product itself and not external pressures such as may appear at the top of the storage tank.

The sensor 45 detects the pressure differential between pressures PB1 and PB2. Thus, the transducers 20A and 20B are adapted primarily to detect the existence of water 15 at the bottom of the storage tank. In the illustration of FIG. 8, the water level 17 is shown exactly between the transducers 20A and 20B. If the water level is low, below the transducer 20B, then only the liquid product appears between the two transducers 20A and 20B and there is a corresponding pressure drop therebetween that relates to the type of product that is in the storage tank. On the other hand, if the water level reaches the transducer 20A, then there is primarily only water with its higher specific gravity between the transducers 20A and 20B. At different positions between the transducers of the water level, there will be a gradual change in the pressure differential with the pressure differential gradually increasing as the water level rises, due to the change occurring from the water level rising and effecting the overall density of the material appearing between the transducers 20A and 20B. Thus, the output on line 45A from sensor 45 may have a threshhold level at which there is an alarm signal indicated to indicate that the water level 17 has reached a predetermined unsafe position with their being an excessive amount of water in the bottom of the tank.

The sensor 40 detects the pressure between transducer 10B and transducer 20B, sensing the pressure between the capillary tubes 24 and 32. This provides an overall density reading with higher resolution because of the larger spacing between these transducers than say between transducers 20A and 20B. In the illustration of FIG. 8 there is a one foot displacement between transducer 10B and transducer 20B.

The outputs of these sensors 40, 42 and 45 may be used as follows.  In order to detect liquid level, the output of sensor 40 gives a reading in pressure per foot of height, or other appropriate unit of length.  The output of sensor 42 is a corrected value for pressure at the transducer 10B.  These two readings may be coupled to a divider D to provide an output on line D1 that is representative of feet indicating the depth of the liquid level.  The divider essentially divides the total pressure at PT1 by the pressure per linear foot to arrive at a linear foot reading indicative of the depth of the liquid product in the tank.  This measurement of the level 19 in FIG. 8 can be easily correlated to volume knowing the size and configuration of the storage tank.  The output of the sensor 45, as indicated previously may couple to a threshhold circuit so as to detect presence of water at a predetermined point between the transducers 20A and 20B.

Now, reference is made to FIGS. 9-12 which show a second embodiment of the present invention.  In this second embodiment, rather than coupling pneumatic signals from the bottom of the tank, electrical leads are coupled to the bottom of the tank and a different form of transducer is employed. However, the basic parameters sensed are substantially the same as in connection with the embodiment illustrated in FIGS. 1-8 herein.

The system illustrated in FIGS. 9-12 is intended for use primarily in connection with gasoline or oil storage tanks such as at a service station.  However, it is understood that the system may be used in connection with virtually any type of liquid storage facility.  The level of liquid is detected by way of pressure measurements, correlating pressure to the height of the liquid in the container.  In accordance with another aspect of the system depicted herein, there is the capability of detecting water in the storage tank which usually settles to the bottom thereof. In accordance with still a further aspect of the invention illustrated in FIGS. 9-12, there is provided a means for preventing liquid overflow from entering the sensing apparatus.

In connection with this second embodiment, some parts of the apparatus are substantially the same as used in the first embodiment. For example, there is provided a rigid cylindrical sleeve or pipe 150 that couples from essentially ground level to the top of the storage tank. The connection of the sleeve or pipe 150 at the bottom thereof may be carried out in the same manner as illustrated in FIG. 1.

FIG. 9 also depicts a coupling tube 152 that is preferably threaded at either end. The coupling tube 152 is supported at one or more positions such as by the support plate 154 illustrated in FIG. 9. The upper threaded end of the tube 14 is threaded into a double female member 156 shown in cross-sectional detail in FIG. 10. The lower threaded end of the tube 152 is engaged in a threaded port of the upper transducer support member 160 illustrated in FIG. 9. FIG. 9 also illustrates the lower transducer support member 170. Both members 160 and 170 are of very similar construction. Because of their similarity of construction, it is believed that only one of these members need be shown in detail and such detail is illustrated in the cross-sectional view of FIG. 12 with respect to the upper transducer support member 160.

The upper transducer support member supports a single transducer identified in FIG. 9 as transducer 165. On the other hand the lower transducer support member 170 supports a pair of transducers identified in FIG. 9 as transducers 175A and 175B. The upper transducer support member 160 may be supported at a position substantially the same as the transducers 10 illustrated in FIG. 1. This may be at a position approximately 1 ft. above the bottom of the storage tank. The lower transducer support member 170 is supported at a position substantially the same as the position of the transducers 20 in FIG. 1 or in other words at the very bottom of the storage tank.

The upper support member 160 is constructed in two similar sections, 160A and 160B. Each of these sections is hollow as illustrated in FIG. 12. Similarly, the lower support member 170 is separated into upper and lower housing sections 170A and 170B. The support member section 160B supports the transducer 165 and for that purpose there is provided a support bracket 162. Similarly, the support member section 170A supports the transducer 175A by means of a support bracket 172. The transducer 175B is supported in the support member 170B by means of the support bracket 173.

FIG. 9 also shows a further coupling tube 180 which intercouples and supports the members 160 and 170. The coupling tube 180 is threaded at its opposite ends. At its top end it engages with the support member section 160B and at its lower end it engages with the support member section 170A. FIG. 9 also illustrates a connector 164 supported in the member 160 in a similar connector 174 supported in the lower support member 170. FIG. 9 also illustrates leads L that couple from each of the transducers to corresponding connectors and from there up through the coupling tubes 152 and 180. At the top end of the apparatus, the leads L may be held within a rigid tubing 182 that couples through the top of the apparatus to the sensing circuitry to be described in further detail hereinafter.

FIG. 9 also illustrates protective plates that are used in association with each of the transducers. These include a plate 169 supported by stand-offs and spaced from the transducer 165 for protecting this transducer.  Similarly, there is a protective plate 177 disposed over the transducer 175A and also a plate 178 disposed adjacent to the transducer 175B.  All the support plates are supported from support member sections by means of stand-offs.  In this respect, note the cross-sectional view of FIG. 12 which illustrates the protective plate 169 with stand-offs 179 and associated bolts 183 for supporting the protective plate 169 from the support member section 160B.

The top of the rigid sleeve 150 is threaded as indicated in FIG. 9 to receive a collar 185.  Secured about the collar 185 is a quick disconnect cap 187 which has a series of latch arms 188.  The cap 187 and the latch arms 188 may be of substantially conventional design and in FIG. 9 are illustrated substantially the same as the arrangement depicted and discussed previously in connection with FIG. 1.  In this connection, when the quick disconnect cap is removed, there is then provided access to the rigid sleeve 150 and the coupling tube 152.

In accordance with the invention, it has been recognized that there can be an overflow condition which occurs if the storage tank is over filled.  The liquid may then extend up into the sleeve 150 and if a coupling tube such as the tube 14 in FIG. 1 is employed, then there may be a tendency for the liquid product to enter the measuring apparatus.  However, this is prevented by virtue of the arrangement illustrated in FIG. 10 including a one-way check valve 190 which couples by way of tube 191 to the member 156.  At the top of the member 156 there is a provided a packing gland 192 which prevents any overflow liquid from entering the member 156 and thus prevents any liquid from entering the coupling tube 152.  Thus, the leads from the transducers at the bottom of the tank can extend up through the tubing 182 and through the packing gland 192 to a
position removed from the storage tank.  In this connection it
is noted that the cap 187 may also be provided with a  packing
gland 189.

In FIG. 10 the one-way check valve or ball valve is
illustrated as including a housing 196 and a movable ball 197.
The bottom of the housing 196 has inlet ports 199.  In FIG. 10,
the valve is shown in its open position permitting air to pass
by way of the valve 190 and tube 191 to the coupling tube 152.
In this way, the air pressure at the top of the tank is
essentially coupled down into the members 160 and 170 so that
one side of each of the transducers is essentially referenced
to the pressure at the top of the tank.  For this purpose, each
of the transducers has an open port that references the
pressure at the top of the tank.  Should liquid flow up the
rigid sleeve 150, then the ball 197 closes and the one-way
valve is closed preventing any liquid from extending into the
tube 191 and the coupling tube 152.  The closing of the valve
190 of course also blocks any air into the coupling tubes to
the transducers but under this overflow condition, a signal
would usually be generated to indicate that an overflow has
occurred.  For example, a one-way valve may be employed which
has electrical switching means associated therewith so that
when the valve closes, an electrical signal is generated to
indicate the closing thereof.

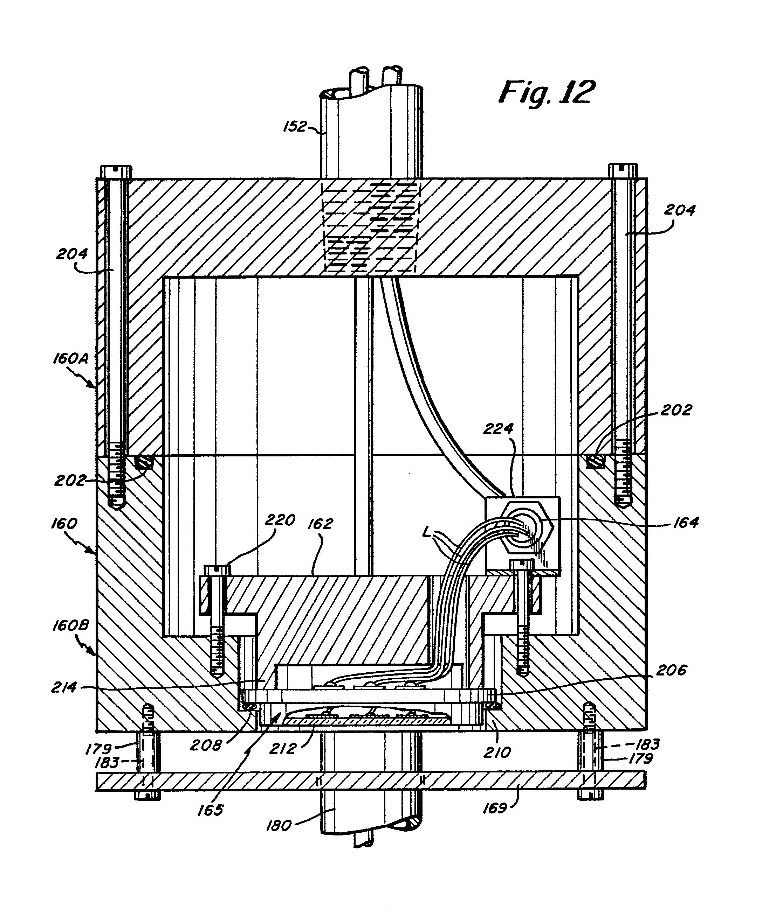

Reference is now made to FIGS. 11 and 12 which now show
further details in particular of the upper transducer support
member 160.  As indicated previously, the member 160 is
separated into an upper support member section 160A and a lower
section 160B.  Between these sections there is provided an
O-ring 202 which provides for a liquid tight seal between these
members.  The members 160A and 160B are held together by means of a series of elongated bolts 204 such as illustrated in FIG. 12.

FIG. 12 also illustrates the transducer 165 which is basically of disk-shape having a larger diameter top section and a smaller diameter lower section. This provides a shoulder 206 which is urged against a sealing O-ring 208 which is urged against shoulder 210 formed by virtue of a step in the recess provided in the support member section 160B. It is noted that the lower face 212 of the transducer is preferably recessed in slightly so as to provide some additional protection for the transducer.

FIGS. 11 and 12 also clearly illustrate the support bracket 162 which is adapted to firmly hold the transducer 165 in place. Similar brackets 172 and 173 are also employed in connection with the transducers 175A and 175B, respectively. The support bracket 162 has opposed legs 214 that are urged against the top surface of the transducer 165. The top of the bracket 162 extends so that a pair of bolts 220 hold the bracket to the support member section 160B. It is furthermore noted that one of the bolts 220 also passes through a connector support bracket 224. The bracket 224 is substantially L-shaped as illustrated in FIGS. 11 and 12. The upright leg of the bracket supports the connector 164 in the illustration of FIG. 12. A similar bracket is also employed in connection with the lower support member 170 for supporting the connector 174.

FIG. 12 also illustrates somewhat more detail of the transducer 165. Each of the transducers may be of substantially identical construction and each is preferably of the type described in U.S. Patent 4,311,980 granted January 19, 1982. Patent 4,311,980 is hereby incorporated by reference hereinto. This patent describes a device for pressure measurement using a resistor strain gage. A plurality of thin-film resistors are screen-printed onto a deformable substrate. In FIG. 12 the face 212 is on a deformable substrate and on the opposite side are noted the thick film resistors. After the screen printing, the resistors are preferably fired. The resistors are then connected to circuitry for measuring changes in their respective resistances due to deformation of the substrate by an external force or pressure that is to be measured. It is also noted in this prior art patent that they teach the means of sensing by arranging the thin-film resistors in a Wheat stone bridge arrangement.There are thus provided usually four resistors, two of which are in tension and the other two of which are in compression. In order to measure the change in resistance of the resistors as a result of strain as indicated, they are connected in a bridge arrangement as illustrated in FIG. 4 of the aforementioned patent. The resistors subjected to the same type of strain are inserted in the opposite arms of the bridge. The strain-free resistance of the four resistors is the same so that with an unstrained substrate, the bridge is balanced and no signal appears at the output when the voltage is applied to the input of the bridge. Of course, upon application of a load on the substrate (face 212 in FIG. 12), the latter bends, the bridge becomes unbalanced and a signal appears at the output. This signal is proportioned to the change in resistance of the resistors and as a result, is proportional to the strain of the substrate, that is to the load that is applied thereto.

Thus, each of the transducers illustrated in FIG. 9 is compensated to atmosphere by virtue of the atmospheric or any other pressure appearing at the top of the tank being coupled to the transducers directly by way of the check valve and the coupling tubes. For this purpose, the transducer may be provided with a port at the top surface thereof which
references one side of the deformable substrate to the pressure
appearing at the top of the tank over the liquid. Thus, with
this atmospheric adjustment, each of the transducers thus
measures a corrected pressure at the location of each
respective transducer. There may thus be provided three
separate bridge circuits, each associated with the transducer
for providing an electrical output signal, the level of which
corresponds to the pressure sensed at each of the locations of
each of the transducers.

The pressure measurements that are taken in connection with
this embodiment may be employed in substantially the same
manner as illustrated previously in connection with FIG. 8 in
the first embodiment. However, with the pressure-to-electrical
transducer that is employed, then the electrical signals are
essentially directly generated. Thus, for example, in order to
detect liquid level, a device is employed similar to the sensor
40 in FIG. 8 to provide a reading in pressure per foot of
height, or other appropriate unit of length. The output of,
for example, the upper transducer 165 can then be coupled to a
divider circuit, similar to the description of FIG. 8 to
provide an output therefrom that is representative of feet
indicating the depth of the liquid level. The divider
essentially divides the total pressure at the position of
transducer 165 by the pressure per linear foot to arrive at a
linear foot reading indicative of the depth of the liquid
product in the tank. This measurement or the level can be
easily correlated to volume knowing the size and configuration
of the storage tank. Similarly, a circuit may be employed
similar to a sensor 45 in FIG. 8 for determining pressure
differential between the transducers 175A and 175B. This may
couple to a threshhold circuit so as to detect the presence of water at a predetermined point between the transducers 175A and 175B.

In connection with the leads L illustrated herein, in a typical arrangement there are four leads coupling from each transducer. There are thus multiple leads that may extend to the top of the apparatus. However, in a preferred arrangement a printed circuit board is mounted within the housing section 160A, which printed circuit board is not illustrated in FIG. 12. This printed circuit board may contain some of the sensors illustrated in FIG. 8. Thus, in this way there may be fewer leads extending to the top of the tank. In essence what is happening is that the sensors of FIG. 8 rather than being disposed at a location outside of the tank are actually disposed within the housing 160 within the tank.
Having now described a limited number of embodiments of the present invention, it should now be apparent to those skilled in the art that numerous other embodiments are contemplated as falling within the scope of this invention as defined by the appended claims.

0145379

## CLAIMS

1. A system for measuring the amount of liquid product in a storage tank comprising;

a first pair of pressure transducers disposed at a bottom of the storage tank with the transducers of said first pair disposed adjacent to one another and spaced therebetween at different heights in the tank,

a second pair of pressure transducers disposed a predetermined distance above the bottom of the storage tank with at least one of said transducers of said second pair spaced a distance from the first pair of pressure transducers with the transducers of said second pair disposed adjacent to one another so as to be subject to the same fluid temperature,

means for supporting the first and second pairs of pressure transducers in fixed position in the storage tank,

and sensing means responsive to said pressure transducer outputs for generating a signal representative of liquid level in the storage tank.

2. A system as set forth in claim 1 wherein said sensing means includes a first sensor for detecting pressure PT1 at one of said transducers of the second pair.

3. A system as set forth in claim 1 wherein said sensing means includes a second sensor for detecting a pressure difference between one transducer of the first pair of pressure transducers and one transducer of the second pair of pressure transducers, said difference representative of a pressure difference per transducer spacing.

4. A system as set forth in claim 3 wherein said first sensor is a pressure difference sensor also receiving a pressure PT2 from the other transducer of the second pair of pressure transducers.

5. A system as set forth in claim 4 wherein said sensing means includes a third sensor for detecting a pressure difference between the pressure PB1 and the pressure PB2.

6. A system as set forth in claim 5 including threshhold sensing means coupling from the third sensor for providing a signal upon the pressure difference reaching a predetermined level.

7. A system as set forth in claim 3 including a divider means coupled from the first and second sensors to provide at its output a signal representative of linear height of the liquid level which reading is convertible into a volume reading of amount of liquid product in the tank.

8. A system as set forth in claim 7 wherein said first sensor is a pressure difference sensor also receiving a pressure PT2 from the other transducer of the second pair of transducers with the pressure PT2 being the pressure at the top of the storage tank over the liquid level.

9. A system as set forth in claim 3 wherein said sensing means includes a third sensor for detecting a pressure difference between the pressure PB1 and the pressure PB2.

10. A system as set forth in claim 1 wherein said means for supporting includes a housing assembly including an upper housing member for supporting the second pair of transducers and a lower housing member for supporting the first pair of transducers.

11.   A system as set forth in claim 10 including protective members adjacent one of the transducers of the second pair and both transducers of the first pair.

12.   A system as set forth in claim 1 including a first tuning means associated with the first pair of transducers for equalizing the volume and sensor sensitivity of the system.

13.   A system as set forth in claim 12 including a second tuning means associated with the second pair of transducers for equalizing the volume and sensor sensitivity of the system.

14.   A system as set forth in claim 1 including capillary tubes coupling from each transducer to the sensing means.

15.   A system as set forth in claim 1 wherein said second pair of transducers are spaced a distance from the first pair of transducers greater than the spacing between the pressure transducers of said first pair of pressure transducers.

16.   A system as set forth in claim 15 wherein the pressure transducers of said second pair are spaced therebetween at different heights in the tank.

17.   A system for measuring the amount of liquid product in a storage tank comprising; a first pair of pressure transducers disposed at a bottom of the storage tank with the transducers of said first pair disposed adjacent to one another and spaced therebetween at different heights in the tank, at least one additional pressure transducer disposed a predetermined distance above the bottom of the storage tank and spaced a distance from the first pair of pressure transducers, sensing means responsive to said pressure transducer output for generating a signal representative of liquid level in the storage tank, said sensing means including a first sensor for detecting a pressure PT1 at said at least one additional transducer, and a second sensor for detecting a pressure difference between one transducer of said first pair of pressure transducers and said at least one additional pressure, said difference representative of a pressure difference per transducer spacing.

18.    A system as set forth in claim 17 including a circuit divider means coupled from said first and second sensors to provide at its output a signal representative of linear height of the liquid level which reading is convertible into a volume reading of an amount of liquid product in the tank.

19.    In a system for measuring the amount of liquid product in a storage tank having a first pair of pressure transducers disposed at a bottom of the storage tank with the transducers of said first pair disposed adjacent to one another and spaced therebetween at different heights in the tank, and at least one additional pressure transducer disposed a predetermined distance above the bottom of the storage tank and spaced a distance from the first pair of pressure transducers, sensor circuit means comprising a first sensor for detecting pressure at said at least one additional pressure transducer, and second sensor means for detecting a pressure difference between one transducer of said first pair of pressure transducers and said at least one additional pressure transducer, said difference representative of a pressure difference per transducer spacing.

20. A system as set forth in claim 19 further including circuit divider means coupled from said first and second sensors to provide at its output a signal representative of linear height of the liquid level, which reading is convertible into a volume reading of an amount of liquid product in the tank.

21. Apparatus for determining liquid content in a storage tank comprising; a first pair of pressure-to-electrical transducers disposed at a bottom of the storage tank with the transducers of said first pair disposed adjacent to one another and spaced therebetween at different heights in the tank, at least one additional pressure-to-electrical transducer disposed a predetermined distance above the bottom of the storage tank and spaced a distance from the first pair of pressure transducers, and sensing means responsive to said pressure-to-electrical transducers for generating a signal representative of liquid content in the storage tank.

22. Apparatus as set forth in claim 21 wherein each pressure-to-electrical transducer comprises a device for pressure measurement employing a resistor strain gage means.

23. Apparatus as set forth in claim 22 wherein said transducer has associated therewith has support means including a support member and associated support bracket.

24. Apparatus as set forth in claim 23 further including an O-ring for sealing the transducer to the support member.

25. Apparatus as set forth in claim 24 including connector means for coupling electrical leads from the transducer to a position remote of the apparatus.

26.  Apparatus as set forth in claim 25 including a coupling tube for coupling the leads to a remote position in combination with a one-way valve adapted to block liquid flow and prevent it from entering the coupling tube.

27.  In a system for determining liquid content in a storage tank, transducer means disposed at a bottom of the storage tank including a coupling tube extending from said transducer means to a location above the storage tank, a one-way valve means having an open position in which air is permitted to pass from the storage tank above the liquid level into the conduit means, and a closed position, adapted to be closed by overflow of liquid from the storage tank, said valve adapted to block the liquid flow and prevent it from entering the conduit means.

28.  A system for detecting water in the bottom of a storage tank wherein a liquid product is stored comprising; a pair of transducers disposed at a bottom of the storage tank with the transducers of said pair disposed adjacent to one another and spaced therebetween at different heights in the tank, said pair of transducers being disposed close to the bottom of the tank in an area where water may accumulate, sensor means adapted to detect the relative pressure differential between said transducers, and means for detecting a change in said pressure differential to indicate the presence of water accumulation between said pressure transducers.

0145379

Fig.1

Fig. 2

Fig. 3

0145379

*Fig.4*

*Fig.5*

0145379

*Fig. 6*

0145379

*Fig.7*

**Fig. 8**

Fig. 9

Fig. 10

Fig. 11

*Fig. 12*